# EUROPEAN PATENT APPLICATION

(11) **EP 4 825 774 A1**
(43) Date of publication of application: **21.10.2026**
(21) Application number: 25170412.8
(22) Date of filing: 14.04.2025
(51) Int. Cl.: B66B 5/18

(54) **ELEVATOR SAFETY SYSTEM**

(71) Applicant: Otis Elevator Company, Farmington, Connecticut 06032 (US)
(72) Inventor: Ruhnke, Jan, 13507 Berlin (DE)
(74) Representative: Schmitt-Nilson Schraud Waibel Wohlfrom Patentanwälte Partnerschaft mbB

(57) **Abstract**

An elevator safety system (26) comprises an electronic safety actuator (22) that is configured for braking and stopping the movement of an elevator car (6) in an elevator system (2), wherein the electronic safety actuator (22) is configured for being activated by interrupting an electric control signal that is supplied to the electronic safety actuator (22); a safety controller (24, 32) that is configured for deactivating the electronic safety actuator (22) by supplying the electric control signal to the electronic safety actuator (22) and for activating the electronic safety actuator (22) by interrupting the supply of the electric control signal to the electronic safety actuator (22); and a temporary power supply circuit (30) that is configured for being activated by the safety controller (24, 32) in advance of a planned reset of the safety controller (24, 32) for temporarily supplying an auxiliary electric control signal to the electronic safety actuator (22) while the safety controller (24, 32) is reset in order to prevent the electronic safety actuator (22) from being activated due to the reset of the safety controller (24, 32).

## Description

The invention relates to an elevator safety system comprising at least one safety controller, to an elevator system comprising such an elevator safety system, and to a method of resetting the safety controller of an elevator safety system.

An elevator system typically comprises at least one elevator car that is configured for moving along a hoistway between a plurality of landings, and a drive system that is configured for driving the elevator car. The drive system comprises at least one motor for moving the elevator car along the hoistway, and at least one elevator brake for braking and/or blocking the movement of the elevator car.

In order to enhance the safety of the elevator system, the elevator car is equipped with an electronic safety actuator (ESA) that is configured for safeties provided at the elevator car for braking and/or blocking any movement of the elevator car in an emergency situation. Elevator systems equipped with an electronic safety actuator do not need a governor. The governor and associated components such as governor ropes are replaced with a speed/acceleration/position sensing system, a controller, and the electronic safety actuator.

The electronic safety actuator may be implemented employing a closed circuit principle. An electronic safety actuator employing a closed circuit principle is deactivated for allowing the elevator car to move along an elevator car guide rail in the hoistway when an electric control signal having an electric control voltage is supplied to the electronic safety actuator. In case the electric control signal is not supplied to the electronic safety actuator, the electronic safety actuator is triggered. Triggering the electronic safety actuator activates at least one safety for braking and/or blocking any movement of the elevator car.

The operation of the electronic safety actuator is controlled by an elevator safety system that includes at least one safety controller. The elevator safety system is configured for deactivating the electronic safety actuator during normal operation by supplying the electric control signal to the electronic safety actuator. The elevator safety system is further configured for deactivating the supply of the electric control signal to the electronic safety actuator in case a malfunction and/or an emergency situation have been detected in order to activate the electronic safety actuator for braking movement of the elevator car and/or for blocking any further movement of the elevator car.

In order to ensure a safe operation of the elevator safety system, the at least one safety controller of the elevator safety system is regularly checked and reset. While the at least one safety controller is being reset, the elevator safety system does not supply an electric control signal to the electronic safety actuator. In consequence, the electronic safety actuator would be activated every time the at least one safety controller is reset.

Each activation of the electronic safety actuator causes undesirable noise and wear. The wear may reduce the lifetime of the electronic safety actuator and/or of the elevator car guide rail.

In consequence, it would be beneficial to provide an improved elevator safety system that prevents the electronic safety actuator from unnecessarily being activated when the at least one safety controller is reset without compromising the safety of the elevator system.

According to an exemplary embodiment of the invention, an elevator safety system comprises an electronic safety actuator configured for braking and/or blocking movement of an elevator car. The electronic safety actuator is configured for being deactivated by supplying an electric control signal to the electronic safety actuator. The electronic safety actuator is further configured for being activated by interrupting the electric control signal that is supplied to the electronic safety actuator.

The elevator safety system further comprises a safety controller that is configured for deactivating the electronic safety actuator by supplying the electric control signal to the electronic safety actuator and for activating the electronic safety actuator by interrupting the supply of the electric control signal to the electronic safety actuator. The elevator safety system also comprises a temporary power supply circuit that is configured for being activated by the safety controller in advance of a scheduled reset of the safety controller for temporarily supplying an auxiliary electric control signal to the electronic safety actuator while the safety controller is reset in order to prevent the electronic safety actuator from being activated due to the reset of the safety controller.

Exemplary embodiments of the invention also include an elevator system comprising at least one elevator car that is configured for traveling along a hoistway between a plurality of landings; at least one electronic safety actuator that is configured for braking and/or blocking movement of the at least one elevator car in an emergency situation; and at least one safety system according to an exemplary embodiment of the invention that is configured for activating the at least one electronic safety actuator in an emergency situation.

Exemplary embodiments of the invention further include a method of resetting the safety controller of an elevator safety system according to an exemplary embodiment of the invention, wherein the method includes (1) activating the temporary power supply circuit; (2) resetting the safety controller after the temporary power supply circuit has been activated; and (3) supplying the auxiliary electric control signal from the temporary power supply circuit to the electronic safety actuator for preventing the electronic safety actuator from being activated while the safety controller is being reset.

In an elevator safety system and in a method of resetting the safety controller of an elevator safety system according to exemplary embodiments of the invention, the temporary power supply circuit prevents the electronic safety actuator from being activated while the safety controller is resetting. As a result, undesirable noise and wear that would be caused by an unnecessary activation of the electronic safety actuator may be avoided.

Since the temporary power supply circuit according to an exemplary embodiment of the invention is configured for supplying the auxiliary electric control signal only temporarily, in particular only for a predefined time period, the electronic safety actuator is not permanently prevented from being activated. In consequence, the safety of the elevator system is not compromised by adding a temporary power supply circuit according to an exemplary embodiment of the invention to the elevator safety system.

In the following, a number of optional features of an elevator safety system according to exemplary embodiments of the invention are set out. Unless explicitly stated otherwise, these features may be realized in particular embodiments, alone or in combination with any of the other features.

The temporary power supply circuit may be configured for supplying the auxiliary electric control signal to the electronic safety actuator for a predefined time period that is in the range of 100 ms to 1000 ms. A predefined time period in the range of 100 ms to 1000 ms is long enough for allowing a complete reset of the safety controller without compromising the safety of the elevator system.

The safety controller may comprise at least one safety processor, in particular a programmable safety processor that is configured for running an appropriate software program for controlling the operation of the safety controller. A safety controller that is controlled by a programmable safety processor running a software program may be adjusted easily to different elevator systems and/or changing safety parameters and requirements.

The temporary power supply circuit may comprise at least one capacitor that is configured for being charged when the temporary power supply circuit is activated. The at least one capacitor may further be configured for supplying the auxiliary electric control signal to the electronic safety actuator while the safety controller is reset. A capacitor can be charged quickly upon activation of the temporary power supply circuit by the at least one safety processor. A capacitor is able to provide an auxiliary electric control signal with a predefined auxiliary control voltage to the safety actuator. Thus, a capacitor is well suited for temporarily providing an auxiliary electric control signal that prevents the electronic safety actuator from being activated while the safety controller is reset.

Activating the temporary power supply circuit may include charging the at least one capacitor of the temporary power supply circuit.

For enhancing the safety provided by the elevator safety system, the temporary power supply circuit may be configured to charge the at least one capacitor from an electric power supply that is galvanically isolated from the capacitor.

The at least one capacitor may be charged via a transformer that galvanically isolates the capacitor from the electric power supply. Such a transformer may be part of the temporary power supply circuit.

The transformer may further provide a voltage converter. The transformer may, in particular, be a component of a DC/DC voltage converter.

The temporary power supply circuit may be configured for supplying electric pulses to the at least one capacitor for charging the at least one capacitor. Each of the electric pulses may have a voltage that is higher than the voltage provided by the power supply of the temporary power supply circuit. Charging the at least one capacitor with electric pulses may enhance the safety of the elevator safety system since, in case of a malfunction, the capacitor is not permanently charged with a constant electric current.

For generating the electric pulses that are supplied to the at least one capacitor, the temporary power supply circuit may comprise at least one of an electric coil, an electric resistor and a diode. The temporary power supply circuit may in particular comprise a full-bridge-rectifier including at least four diodes.

For generating the electric pulses that are supplied to the at least one capacitor, the temporary power supply circuit may further comprise at least one electric switch; the temporary power supply circuit may in particular comprise two electric switches or four electric switches.

Activating the temporary power supply circuit may include periodically opening and closing the at least one electric switch of the temporary power supply circuit for generating electric pulses for charging the at least one capacitor.

The temporary power supply circuit may comprise two pairs of electric switches. The two electric switches of each pair of electric switches may be configured to switch simultaneously with each other. The two pairs of electric switches may further be configured to switch oppositely to each other so that the first pair of electric switches are open when the second pair of electric switches are closed and vice versa. Such a configuration of the electric switches allows for supplying alternating currents to a primary coil of a transformer resulting in the induction of electric pulses in a secondary coil of the transformer. The electric pulses induced in the secondary coil of the transformer may have a higher or a lower voltage than the pulses supplied to the primary coil.

The electric switches may include electromagnetic switches, such as relays. The electric switches may also include electronic switches, in particular semiconductor switches, such as MOSFETs or bipolar transistors.

The electric switches, the transformer and the diodes may constitute a voltage converter, in particular a DC/DC-voltage converter, that allows for generating auxiliary electric control signals having a voltage that is higher than the power supply voltage that is supplied to the temporary power supply circuit.

In the following, exemplary embodiments of the invention are described in more detail with respect to the enclosed figures:
Figure 1 depicts a schematic view of an elevator system according to an exemplary embodiment of the invention.
Figure 2 depicts a schematic diagram of an elevator safety system according to an exemplary embodiment of the invention.
Figure 3A depicts a schematic circuit diagram of a temporary power supply circuit of an elevator safety system according to an exemplary embodiment of the invention in a first switching state.
Figure 3B depicts a schematic circuit diagram of the temporary power supply circuit depicted in Figure 3A in a second switching state.
Figure 4A depicts a diagram that illustrates the electric voltage that is supplied to the primary coil of the transformer of the temporary power supply circuit depicted in Figures 3A and 3B.
Figure 4B depicts a diagram that schematically illustrates the electric voltage that is induced in the secondary coil of the transformer.
Figure 4C depicts a diagram that illustrates the electric voltage that is supplied from the capacitor to the electronic safety actuator, when the electric switches are periodically switched between the first state and the second state.
Figure 5A depicts a schematic circuit diagram of another temporary power supply circuit of an elevator safety system according to an exemplary embodiment of the invention in a first switching state.
Figure 5B depicts a schematic circuit diagram of the temporary power supply circuit depicted in Figure 5A in a second switching state.
Figure 6A depicts electric pulses that are supplied to the capacitor of the temporary power supply circuit depicted in Figures 5A and 5B.
Figure 6B schematically illustrates the voltage across the capacitor of the temporary power supply circuit depicted in Figures 5A and 5B as a function of time.
Figure 7 depicts a schematic circuit diagram of a temporary power supply circuit according to yet another exemplary embodiment of the invention.
Figure 8 depicts a schematic circuit diagram of a temporary power supply circuit according to a further exemplary embodiment of the invention.
Figure 9 depicts a flow chart of a method for resetting an elevator safety controller according to an exemplary embodiment of the invention.

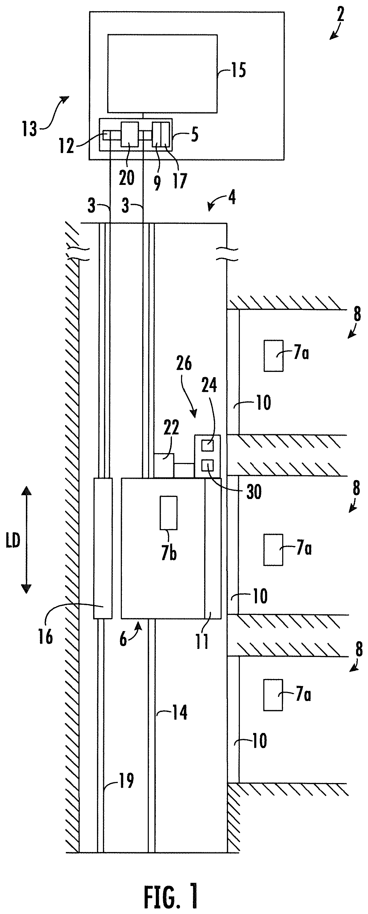

Figure 1 schematically depicts an elevator system 2 according to an exemplary embodiment of the invention.

The elevator system 2 comprises a hoistway 4 extending along a longitudinal direction LD between a plurality of landings 8 located on different floors. The elevator system 2 includes an elevator car 6 that is arranged in the hoistway 4 for being moved along the longitudinal direction LD between the plurality of landings 8. The elevator car 6 may in particular be movable along at least one elevator car guide rail 14 provided in the hoistway 4 and extending along the longitudinal direction LD.

The longitudinal direction LD may be oriented in a vertical direction, as it is depicted in Figure 1. In an alternative embodiment, which is not depicted in the figures, the longitudinal direction LD may be inclined with respect to the vertical direction.

Although only a single elevator car guide rail 14 is depicted in Figure 1, the elevator system 2 may comprise a plurality of elevator car guide rails 14 extending parallel to each other.

Although only a single elevator car 6 is depicted in Figure 1, exemplary embodiments of the invention may also include elevator systems 2 comprising a plurality of elevator cars 6 moving in one or more hoistways 4.

The elevator car 6 is movably suspended by means of a tension member 3. Although only a single tension member 3 is depicted in Figure 1, exemplary embodiments of the invention may also include elevator systems 2 comprising a plurality of tension members 3.

The at least one tension member 3, for example a rope or belt, is coupled to an elevator drive system 5. The elevator drive system 5 comprises a motor 9 for rotatably driving a shaft 12, and a drive 17 that harnesses and controls the electrical energy supplied to the motor 9. The elevator drive system 5 is configured for driving the at least one tension member 3, which is coupled to the shaft 12 via traction, in order to move the elevator car 6 in the hoistway 4 along the longitudinal direction LD between the plurality of landings 8.

The elevator drive system 5 is further provided with at least one elevator brake 20 for braking rotation of the shaft 12 in order to allow for stopping movement of the elevator car 6 and holding the elevator car 6 at a desired position in the hoistway 4.

Optionally, the elevator system 2 may comprise a counterweight 16. The counterweight 16 may be attached to the at least one tension member 3 opposite to the elevator car 6 and configured for moving concurrently and in opposite direction with respect to the elevator car 6. The counterweight 16 may move along at least one counterweight guide rail 19 provided in the hoistway 4 and extending along the longitudinal direction LD.

The at least one tension member 3 may be a rope, e.g. a steel cord, or a belt, in particular a coated steel belt. The at least one tension member 3 may be uncoated. Alternatively, the at least one tension member 3 may be coated with a coating, e.g. with a coating having the form of a polymer jacket. In a particular embodiment, the at least one tension member 3 may be a belt comprising a plurality of polymer coated steel cords (not shown). The elevator system 2 may have a traction drive including a traction sheave for driving the at least one tension member 3.

In the exemplary embodiment depicted in Figure 1, a 1:1 roping is employed for suspending the elevator car 6. The type of the roping is, however, not essential for the invention and different kinds of roping, e.g. a 2:1 roping or a 4:1 roping may be employed as well.

A landing door 10 is provided at each of the landings 8. The elevator car 6 is provided with a corresponding elevator car door 11 for allowing passengers to transfer between a landing 8 and the interior of the elevator car 6, when the elevator car 6 is positioned at the respective landing 8.

For moving the elevator car 6 along the hoistway 4 between the different landings 8, the elevator drive system 5 may be controlled by an elevator controller 15 of the elevator system 2.

The elevator system 2 may be a machine room-less elevator system 2. In an alternative embodiment, the elevator system 2 may comprise a machine room 13 housing the elevator drive system 5 and the elevator controller 15.

Input to the elevator controller 15 may be provided via landing control panels 7a provided on every landing 8, in particular in the vicinity of the landing doors 10, and/or via an elevator car control panel 7b provided inside the elevator car 6.

The landing control panels 7a may comprise elevator hall call buttons and/or destination call buttons. Destination call buttons allow passengers to enter their respective destinations before entering the elevator car 6. In case the landing control panels 7a are equipped with destination call buttons, no elevator car control panel 7b needs to be provided inside the elevator car 6 since the elevator system 2 is fully controlled by the commands input via the landing control panels 7a.

The landing control panels 7a and the elevator car control panel 7b may be coupled with the elevator controller 15 by means of electrical wiring not shown in Figure 1, in particular by an electric bus, or by wireless data connections.

The elevator car 6 is further equipped with an electronic safety actuator (ESA) 22 that is configured for engaging with the elevator car guide rail 14 in an emergency situation for stopping and blocking any movement of the elevator car 6.

The electronic safety actuator 22 is implemented employing a closed circuit principle. This means that the electronic safety actuator 22 is deactivated and allows the elevator car 6 to move along the elevator car guide rail 14 in the hoistway 4 when an electric control signal having a predefined electric control voltage is supplied to the electronic safety actuator 22.

In case no electric control signal is supplied to the electronic safety actuator 22, the electronic safety actuator 22 is triggered causing at least one safety, which is part of the electronic safety actuator 22, to engage with the elevator car guide rail 14 for braking movement of the elevator car 6. Particularly, the electronic safety actuator 22 may eventually stop and block any movement of the elevator car 6.

The operation of the electronic safety actuator 22 is controlled by an elevator safety system 26 including at least one safety controller 24. The elevator safety system 26 is configured to supply the electric control signal to the electronic safety actuator 22 during normal operation in order to deactivate the electronic safety actuator 22 for allowing the elevator car 6 to move along the elevator car guide rail 14. The elevator safety system 26 is further configured to deactivate the supply of the electric control signal to the electronic safety actuator 22 in case a malfunction and/or an emergency situation have been detected in order to activate the electronic safety actuator 22 for braking movement of the elevator car 6 and/or for preventing any further movement of the elevator car 6 along the elevator car guide rail 14.

Although only one electronic safety actuator 22 is depicted in Figure 1, the elevator car 6 may be equipped with a plurality of electronic safety actuators 22. Optionally, at least one electronic safety actuator 22 may also be provided at the counterweight 16.

**In** order to ensure a safe operation of the elevator safety system 26, the at least one safety controller 24 of the elevator safety system 26 needs to be regularly checked and reset. While the at least one safety controller 24 is being reset, the elevator safety system 26 does not supply the electric control signal to the electronic safety actuator 22. **In** consequence, resetting the at least one safety controller 24 would result in activating the electronic safety actuator 22.

Every activation of the electronic safety actuator 22 causes noise and wear. Frequent activation of the electronic safety actuator 22 may reduce the lifetime of the electronic safety actuator 22 and/or of the elevator car guide rail 14. Thus, any unnecessary activation of the electronic safety actuator 22, such as an activation caused by resetting at least one safety controller 24, is undesirable and should be avoided, if possible.

**In** order to prevent an unnecessary activation of the electronic safety actuator 22 when the at least one safety controller 24 is reset, an elevator safety system 26 according to an exemplary embodiment of the invention that is configured for controlling the operation of the electronic safety actuator 22 comprises a temporary power supply circuit 30. The temporary power supply circuit 30 is configured for temporarily supplying an auxiliary electric control signal to the electronic safety actuator 22 while the at least one safety controller 24 is reset. During reset, the auxiliary electric control signal temporarily replaces the electric control signal that is supplied from the at least one safety controller 24 to the electronic safety actuator 22 during normal operation.

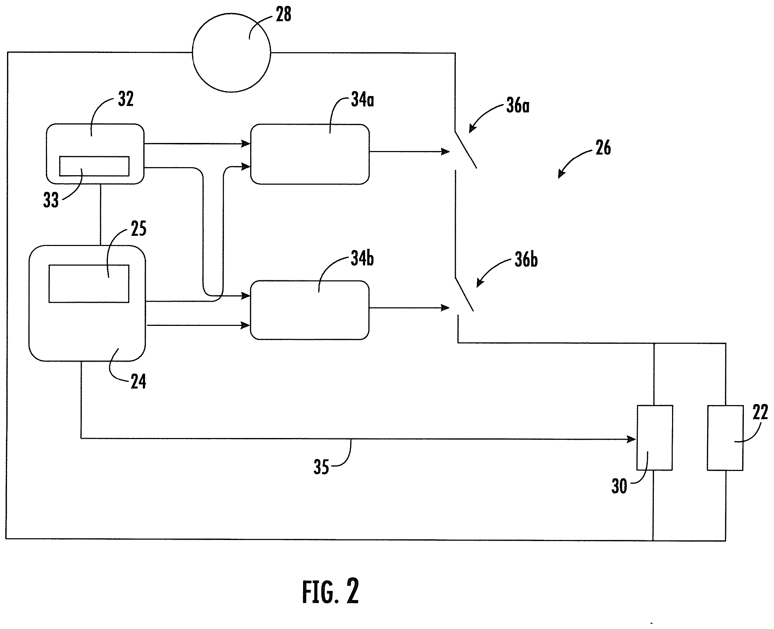

Figure 2 depicts a schematic diagram of an elevator safety system 26 according to an exemplary embodiment of the invention.

The elevator safety system 26 comprises an electronic safety actuator 22 and an electric power supply 28 that is configured for supplying an electric control signal having an electric control voltage for deactivating the electronic safety actuator 22 to the electronic safety actuator 22. The electric control signal is supplied via two safety switches 36a, 36b that are connected in a serial configuration so that the electric control signal is supplied to the electronic safety actuator 22 only if both safety switches 36a, 36b are closed.

The safety switches 36a, 36b may be electromagnetic switches, such as relays. The safety switches 36a, 36b may also be electronic switches, in particular semiconductor switches, such as MOSFETs or bipolar transistors.

The elevator safety system 26 further comprises a first safety controller 24 and a second safety controller 32. The first safety controller 24 is configured for controlling the operation of the electronic safety actuator 22, as it has been described before, by controlling the operation of the two safety switches 36a, 36b.

The second safety controller 32 may be a watchdog controller that is configured for monitoring the operation of the first safety controller 24 and for activating the electronic safety actuator 22 by opening at least one of the two safety switches 36a, 36b in case it detects a malfunction of the first safety controller 24.

In an alternative configuration, the second safety controller 32 may be a copy of the first safety controller 24 and it may be configured for performing the same tasks as the first safety controller 24 for adding redundancy to the elevator safety system 26.

Each of the first and second safety controllers 24, 32 may comprise at least one safety processor 25, 33, in particular a programmable safety processor 25, 33 that is configured for running an appropriate program for controlling the operation of the respective safety controller 24, 32.

The first and second safety controllers 24, 32 are coupled to the safety switches 36a, 36b via logic circuits 34a, 34b. The logic circuits 34a, 34b may include AND-circuits and/or OR-circuits and they are configured to cause both safety switches 36a, 36b to open and interrupt the supply of the electric control signal to the electronic safety actuator 22 in case a malfunction is detected by at least one of the first and second safety controllers 24, 32.

The elevator safety system 26 further comprises a temporary power supply circuit 30 that is configured for temporarily supplying an auxiliary electric control signal to the electronic safety actuator 22 when at least one of the first and second safety controllers 24, 32 is reset. Resetting at least one of the first and second safety controllers 24, 32 causes at least one of the first and second safety switches 36a, 36b to open so that the electric control signal is not supplied from the electric power supply 28 to the electronic safety actuator 22 via the first and second safety switches 36a, 36b.

The temporary power supply circuit 30 may be activated by an activation signal that is supplied from at least one of the first and second safety controllers 24, 32 to the temporary power supply circuit 30 via an activation line 35.

The temporary power supply circuit 30 is configured to supply the auxiliary electric control signal for a predefined time period that is long enough for holding the electronic safety actuator 22 in the deactivated state while at least one of the first and second safety controllers 24, 32 is reset.

The temporary power supply circuit 30 is configured to stop supplying the auxiliary electric control signal to the electronic safety actuator 22 once the predefined time period has elapsed. In consequence, the electronic safety actuator 22 is activated in case the first or second safety controller 24, 32 does not resume its operation in due time after having been reset.

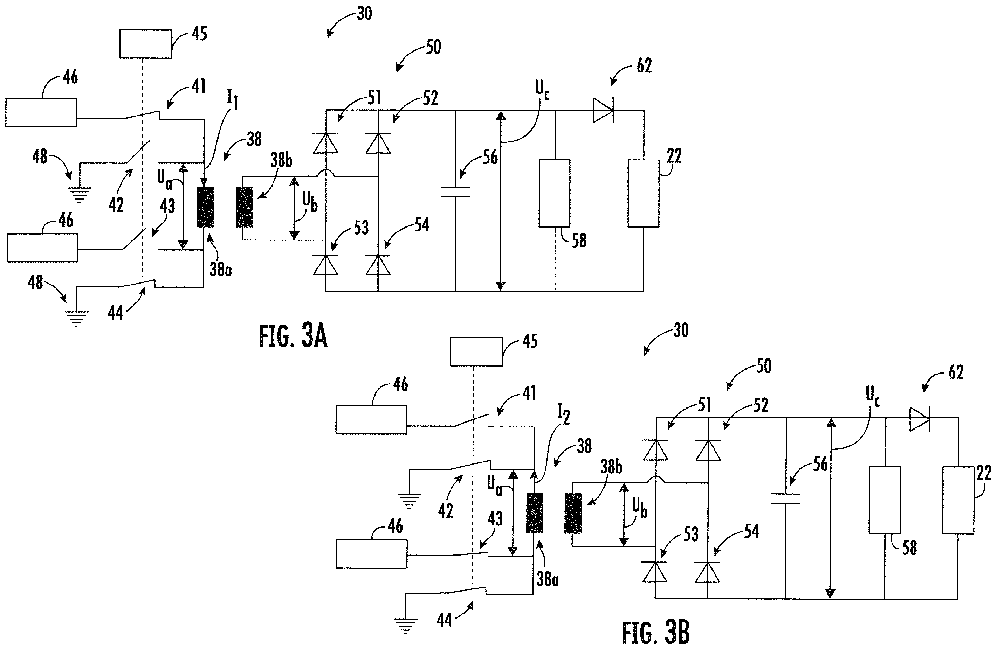

Figures 3A and 3B depict schematic circuit diagrams of a temporary power supply circuit 30 of an elevator safety system 26 according to an exemplary embodiment of the invention.

The temporary power supply circuit 30 comprises a transformer 38 having a primary coil 38a and a secondary coil 38b.

Each of the two ends of the primary coil 38a is electrically coupled to a pair of electric switches 41-44, respectively.

Each pair of electric switches 41-44 comprises a first electric switch 41, 43 that is electrically coupled to an electric power supply 46 and a second electric switch 42, 44 that is electrically coupled to electric ground 48.

The electric switches 41-44 may be electromagnetic switches, such as relays. The electric switches 41-44 may also be electronic switches, in particular semiconductor switches, such as MOSFETs or bipolar transistors.

The terminals of the secondary coil 38b of the transformer 38 are electrically coupled to four diodes 51-54 forming a full-bridge-rectifier 50. In a further embodiment that is not explicitly depicted in the figures, the full-bridge-rectifier 50 may comprise active switching elements, such as transistors, instead of or in addition to the diodes 51-54.

A capacitor 56 is electrically coupled to the output side of the full-bridge-rectifier 50.

The electric power supply 46 may be identical with the electric power supply 28 depicted in Figure 2. Alternatively, the electric power supply 46 may be a separate auxiliary power supply 46 that is provided independently from the electric power supply 28 of the elevator safety system 26. The auxiliary electric power supply 46 of the temporary power supply circuit 30 may in particular be galvanically isolated from the capacitor 56 and from the electric power supply 28 of the elevator safety system 26 depicted in Figure 2.

The temporary power supply circuit 30 further comprises a switch controller 45 that is coupled to the electric switches 41-44 and configured for controlling the operation of the electric switches 41-44.

The switch controller 45 is in particular configured for concurrently switching the electric switches 41-44 between a first state depicted in Figure 3A, and a second state depicted in Figure 3B.

In the first state depicted in Figure 3A, the first and fourth electric switches 41, 44 are closed and the second and third electric switches 42, 43 are open. The first electric switch 41 electrically couples the power supply 46 to a first end of the primary coil 38a, and the fourth electric switch 44 electrically couples a second end of the primary coil 38b to the electric ground 48. The configuration of the electric switches 41-44 in the first state depicted in Figure 3A results in a first current I₁ flowing in a first direction through the primary coil 38a of the transformer 38.

In the second state depicted in Figure 3B, the second and third electric switches 42, 43 are closed and the first and fourth electric switches 41, 44 are open. The second electric switch 42 electrically couples first end of the primary coil 38a to the electric ground 48, and the third electric switch 43 electrically couples the power supply 46 to the second end of the primary coil 38a. The configuration of the electric switches 41-44 in the second state depicted in Figure 3B results in a second current I₂ flowing in a second direction, which is opposite to the first direction, through the primary coil 38a of the transformer 38.

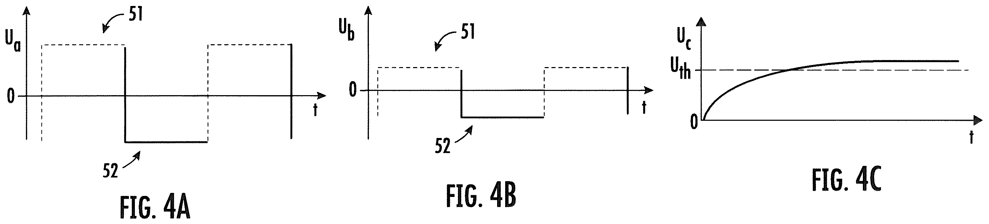

Figure 4A depicts a diagram illustrating the electric voltage Uₐ that is supplied to the primary coil 38a of the transformer 38 when the electric switches 41-44 are in the first state S1 and in the second state S2, respectively.

The electric switches 41-44 may be switched periodically between the first state and the second state with a frequency in the range of 1 kHz to 100 kHz.

The alternating currents I₁, I₂ flowing through the primary coil 38a of the transformer 38 induce corresponding alternating currents in the secondary coil 38b of the transformer 38. The size of the voltages and currents induced in the secondary coil 38b depend on the ratio between the numbers of the windings of the two coils 38a, 38b of the transformer 38.

The ratio between the numbers of the windings of the two coils 38a, 38b may, for example be 4:1, 3:1, 2:1, 1:1, 1:2, 1:3 or 1:4.

If the secondary coil 38b comprises a different number of windings than the primary coil 38a, the transformer 38 acts as a voltage converter.

Figure 4B depicts a diagram that schematically illustrates the electric voltage U_{b} induced in the secondary coil 38b.

The electric voltage U_{b} induced in the secondary coil 38b is rectified by the full-bridge-rectifier 50 and supplied to a capacitor 56 that is electrically coupled to the output side of the full-bridge-rectifier 50.

When the electric switches 41-44 are periodically switched between the first state and the second state, the output of the full-bridge-rectifier 50 charges the capacitor 56. Charging the capacitor 56 results in the build-up of a voltage U_{c} across the capacitor 56. The voltage U_{c} across the capacitor 56 may be supplied as an auxiliary electric control voltage Uₐᵤₓ to the electronic safety actuator 22 for preventing the electronic safety actuator 22 from being activated in case at least one of the electric safety switches 36a, 36b (see Figure 2) is opened due to a reset of at least one of the safety controllers 24, 32.

Figure 4C depicts a diagram that illustrates the electric voltage U_{c} = Uₐᵤₓ that is supplied from the capacitor 56 to the electronic safety actuator 22, when the electric switches 41-44 are periodically switched between the first state and the second state.

When the electric switches 41-44 are not operated anymore, no electric energy is supplied from the transformer 38 to the capacitor 56. In consequence, the capacitor 56 will discharge over time via the electronic safety actuator 22 and/or via a discharge resistor 58 coupled parallel to the capacitor 56 and the electronic safety actuator 22. A decoupling diode 62 prevents the capacitor 56 from being charged from the side of the electronic safety actuator 22.

In consequence, the electronic safety actuator 22 will be activated in case the electric control signal that deactivates the electronic safety actuator 22 is not supplied via the electric safety switches 36a, 36b when the electric voltage U_{c} of the capacitor 56 has dropped below a predetermined threshold voltage Uₜₕ.

The time period after which the electric voltage U_{c} of the capacitor 56 drops below the predetermined threshold voltage Uₜₕ after the operation of the electric switches 41-44 has been stopped is defined by the capacity of the capacitor 56, the inner resistance of the electronic safety actuator 22 and the resistance of the optional discharge resistor 58 that may be electrically coupled parallel to the capacitor 56 and the electronic safety actuator 22.

The voltage U_{C} at the capacitor 56 of the temporary power supply circuit 30 is monitored and the elevator system 2 returns to normal operation only after the capacitor 56 has been sufficiently discharged, and the voltage U_{C} at the capacitor 56 has dropped below a predefined threshold.

If the voltage U_{C} at capacitor 56 should not drop below the predefined threshold within a reasonable period of time, or if it rises above the predefined threshold although the temporary power supply circuit 30 has not been activated, this indicates a serious and potentially dangerous malfunction of the elevator system 2. In consequence, the elevator system 2 is prevented from normal operation.

In the temporary power supply circuit 30 depicted in Figures 3A and 3B, the capacitor 56 is not charged in case the electric switches 41-44 are stuck in one of their positions due to a malfunction of the switch controller 45 or at least one of the electric switches 41-44.

In consequence, the temporary power supply circuit 30 depicted in Figures 3A and 3B is fail safe, since the temporary power supply circuit 30 depicted in Figures 3A and 3B will not permanently supply an auxiliary electric control voltage Uₐᵤₓ to the electronic safety actuator 22 if at least one of the electric switches 41-44 should be stuck in a closed position.

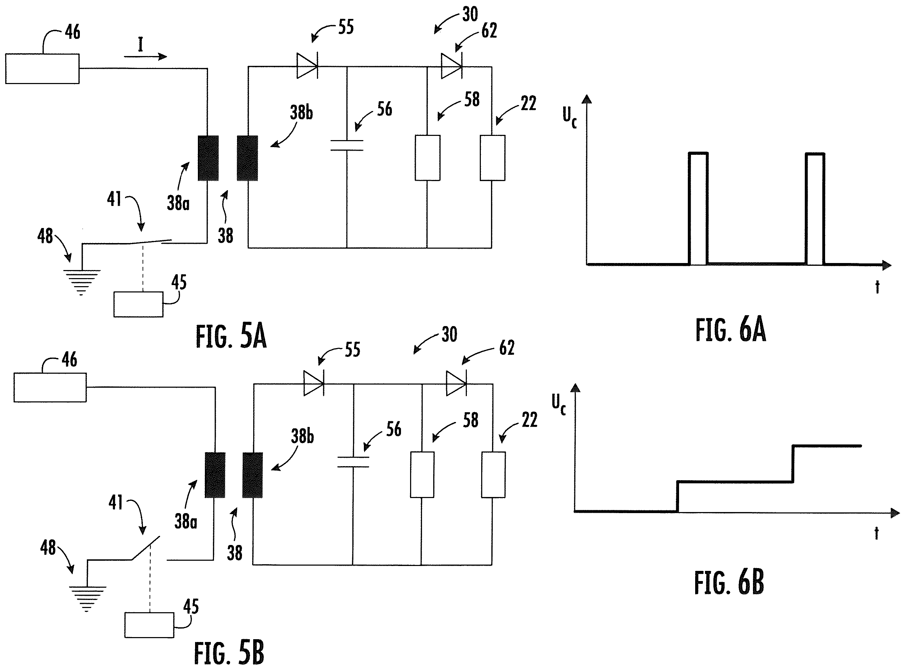

Figures 5A and 5B depict schematic circuit diagrams of a temporary power supply circuit 30 according to another exemplary embodiment of the invention.

The power supply circuit 30 depicted in Figures 5A and 5B has a simpler configuration than the power supply circuit 30 depicted in Figures 3A and 3B and may be implemented at lower costs.

The power supply circuit 30 depicted in Figures 5A and 5B also comprises a transformer 38 including a primary coil 38a and a secondary coil 38b.

Instead of four electric switches 41-44, the power supply circuit 30 depicted in Figures 5A and 5B comprises only a single electric switch 41 that allows for selectively allowing and interrupting the flow of an electric current I from the power supply 46 to the electric ground 48 via the primary coil 38a of the transformer 38.

Instead of a full-bridge-rectifier 50, only a single diode 55 is provided between the secondary coil 38b of the transformer 38 and the capacitor 56.

In a power supply circuit 30 as it is depicted in Figures 5A and 5B, the capacitor 56 may be charged by periodically opening and closing the electric switch 41 for generating electric pulses in the primary coil 38a.

The electric pulses generated in the primary coil 38a induce corresponding electric pulses in the secondary coil 38b of the transformer 38. Depending on the ratio between the numbers of the windings of the primary and secondary coils 38a, 38b, the voltage of the electric pulses induced in the secondary coil 38b may be higher or lower than the voltage of the electric pulses generated in the primary coil 38a. I.e. the transformer 38 may function as a voltage converter.

The electric pulses generated in the secondary coil 38b of the transformer 38 are half wave rectified by the diode 55 and the rectified electric pulses are supplied to the capacitor 56 for gradually charging the capacitor 56. The rectified electric pulses that are supplied to the capacitor 56 are schematically depicted in Figure 6A.

Figure 6B schematically illustrates the voltage U_{c} across the capacitor 56 as a function of time t.

Similar to the embodiment depicted in Figures 3A and 3B, the voltage U_{c} across the capacitor 56 may temporarily substitute the electric control signal, which is supplied to the electronic safety actuator 22 for deactivating the electronic safety actuator 22, during a time period in which the at least one of the safety controllers 24, 32 is reset and the electric safety switches 36a, 36b are open so that no electric control signal is supplied to the electronic safety actuator 22 via the electric safety switches 36a, 36b (see Figure 2).

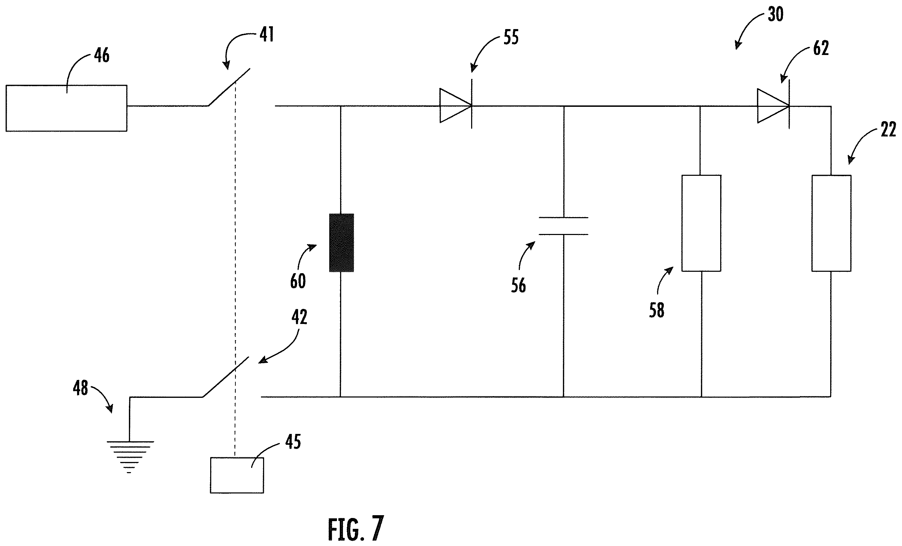

Figure 7 depicts a schematic circuit diagram of temporary power supply circuit 30 according to yet another exemplary embodiment of the invention.

The temporary power supply circuit 30 depicted in Figure 7 does not comprise a transformer 38, but only a single inductivity 60 or coil that is electrically coupled to the power supply 46 and to the electric ground 48 by two electric switches 41, 42 that are controllable by a switch controller 45.

A capacitor 56 is electrically coupled parallel to the inductivity 60 with a rectifying diode 55 being electrically coupled between one terminal of the inductivity 60 and one terminal of the capacitor 56. The electronic safety actuator 22 is electrically coupled parallel to the capacitor 56. In consequence, the voltage U_{c} across the capacitor 56 is applied to the electronic safety actuator 22 as an auxiliary electric control signal.

For activating the temporary power supply circuit 30 depicted in Figure 7, the switch controller 45 periodically closes and opens the two electric switches 41, 42 for periodically applying a power supply voltage U_{cc} that is supplied by the electric power supply 46 to the inductivity 60. Periodically applying the power supply voltage U_{cc} to the inductivity 60 causes the inductivity 60 to generate electric pulses.

The electric pulses generated by the inductivity 60 are rectified by the diode 55 and supplied to the capacitor 56 for charging the capacitor 56. Charging the capacitor 56 increases the voltage U_{C} across the capacitor 56 that is supplied as an auxiliary electric control signal to the electronic safety actuator 22.

When the voltage U_{C} across the capacitor 56 has reached a predetermined threshold voltage Uₜₕ that is sufficient for holding the electronic safety actuator 22 in its deactivated state, at least one of the safety processors 25, 33 may be reset without causing an activation the electronic safety actuator 22, as it has been described before with respect to the embodiments depicted in Figures 3A, 3B, 5A and 5B.

Since, in a temporary power supply circuit 30 according to an exemplary embodiment as it is depicted in Figure 7, the electric pulses may have higher peak voltages Uₚₑₐₖ than the power supply voltage U_{cc}, the power supply voltage U_{cc} may be lower than the predetermined threshold voltage Uₜₕ.

In other words, the temporary power supply circuit 30 according to an exemplary embodiment as it is depicted in Figure 7 may act as a DC/DC voltage converter that allows for charging the capacitor 56 to a voltage U_{c} that is higher than the power supply voltage U_{cc} provided by the power supply 46.

If the electric switches 41, 42 should be permanently closed, e.g. due to a malfunction of one of the electric switches 41, 42 or of the switch controller 45, the voltage U_{C} across the capacitor 56 is limited to the power supply voltage U_{cc}. In consequence, the voltage U_{C} across the capacitor 56 will not reach or exceed the predetermined threshold voltage Uₜₕ.

As a result, the temporary power supply circuit 30 depicted in Figure 7 is fail safe as it does not permanently deactivate the electronic safety actuator 22 in case of such a malfunction.

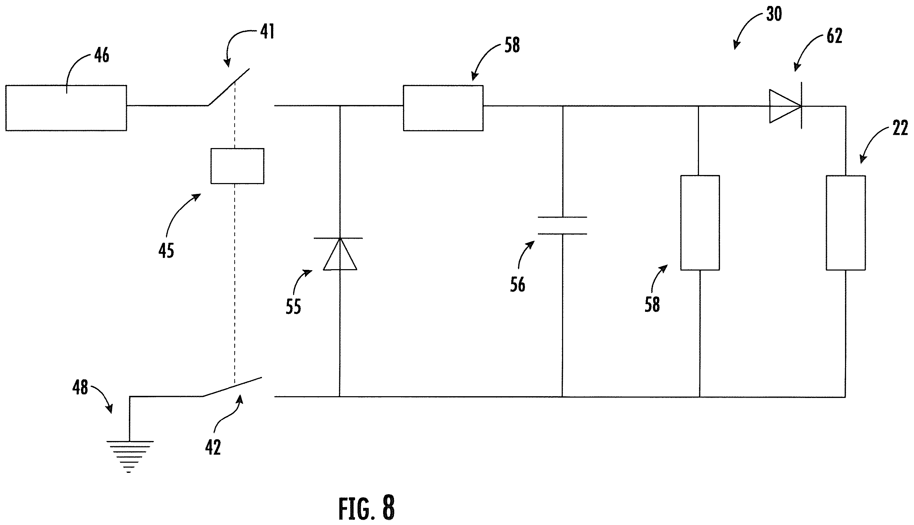

Figure 8 depicts a schematic circuit diagram of temporary power supply circuit 30 according to a further exemplary embodiment of the invention.

The embodiment of the temporary power supply circuit 30 depicted in Figure 8 comprises a capacitor 56, but no inductivity 60. Instead, the capacitor 56 is charged by the power supply voltage U_{cc} that is supplied by the power supply 46 via an electric resistor 58 when the electric switches 41, 42 are closed.

In the embodiment depicted in Figure 7, the capacitor 56 cannot be charged to a voltage U_{C} that is higher than the voltage U_{cc} supplied by the power supply 46. In consequence, the power supply voltage U_{cc} needs to be higher than he predetermined threshold voltage Uₜₕ in order to charge the capacitor 56 to a voltage U_{c} that exceeds the threshold voltage Uₜₕ of the electronic safety actuator 22.

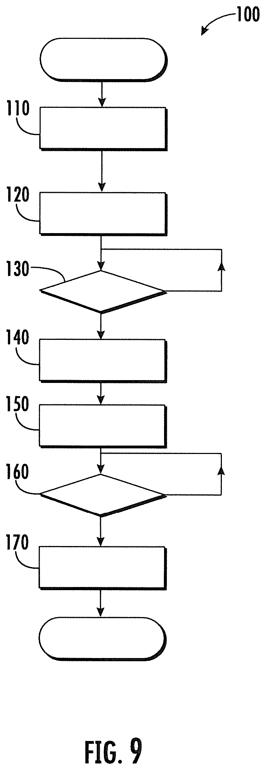

Figure 9 depicts a flow chart of a method 100 for resetting an elevator safety controller 24, 32 according to an exemplary embodiment of the invention.

At the start 110 of the method 100, the elevator system 2 and the elevator safety system 26 are in a normal operation mode. In the normal operation mode, a safety chain (not shown) of the elevator system 2 and the safety switches 36a, 36b of the elevator safety system 26 (see Figure 2) are closed. In consequence, the electric control voltage provided by the electric power supply 28 is supplied to the electronic safety actuator 22 via the safety switches 36a, 36b and the electronic safety actuator 22 is deactivated.

In a next step 120, the elevator system 2 is brought into a safe state that allows for safely resetting the at least one elevator safety controller 24, 32 of the elevator safety system 26. Bringing the elevator system 2 into a safe state may in particular include stopping the elevator car 6 at one of the landings 8, opening the elevator car door 11 and a corresponding landing door 10 in order to prevent passengers from being trapped inside the elevator car 6, and opening the safety chain of the elevator system 2 for preventing any further operation of the elevator system 2.

In the following step 130, the temporary power supply circuit 30 is activated by charging the capacitor 56, as it has been described before with reference to Figures 3A to 8.

After the capacitor 56 has been charged to a predefined charging state in which the voltage U_{C} across the capacitor 56 exceeds the predetermined threshold voltage Uₜₕ that is necessary for preventing the electronic safety actuator 22 from being activated, the at least one elevator safety controller 24, 32 is reset in step 140. Resetting the at least one elevator safety controller 24, 32 results in opening at least one of the safety switches 36a, 36b of the elevator safety system 26 (see Figure 2). As a result, an electric control signal is not supplied from the electric power supply 28 of the elevator safety system 26 to the electronic safety actuator 22 via the safety switches 36a, 36b.

However, according to exemplary embodiments of the invention, the electronic safety actuator 22 is prevented from being activated by an auxiliary electric control signal that is temporarily supplied from the capacitor 56 to the electronic safety actuator 22, as has been described before.

After the reset of the at least one elevator safety controller 24, 32 has been successfully completed, both safety switches 36a, 36b of the elevator safety system 26 will be closed again. In consequence, the electric control voltage provided by the electric power supply 28 is supplied as an electric control signal to the electronic safety actuator 22. This prevents the electronic safety actuator 22 from being activated.

In the following step 160, the voltage at the capacitor 56 of the temporary power supply circuit 30 is monitored and the method 100 waits until the capacitor 56 has been sufficiently discharged and the voltage at the capacitor 56 drops below a predefined threshold.

After the capacitor 56 has been sufficiently discharged and the voltage at the capacitor 56 has dropped below the predefined threshold, the safety chain of the elevator system 2 is closed and the elevator system 2 is switched back into normal operation in step 170.

If the voltage at capacitor 56 should not drop below the predefined threshold within a reasonable period of time, or if it rises above the predefined threshold although the temporary power supply circuit 30 has not been activated, this indicates a serious and potentially dangerous malfunction of the elevator system 2. In this case, the safety chain is opened and remains open in order to prevent the elevator system 2 from operating in a normal mode of operation.

While the invention has been described with reference to exemplary embodiments, it will be understood by those skilled in the art that various changes may be made and equivalents may be substituted for elements thereof without departing from the scope of the invention. In addition, many modifications may be made to adopt a particular situation or material to the teachings of the invention without departing from the essential scope thereof. Therefore, the invention is not intended to be limited to the specific embodiments disclosed, but to encompass all embodiments within the scope of the appended claims.

### References

- 2: elevator system
- 3: tension member
- 4: hoistway
- 5: elevator drive system
- 6: elevator car
- 7a: landing control panel
- 7b: elevator car control panel
- 8: landing
- 9: motor
- 10: landing door
- 11: elevator car door
- 12: shaft
- 13: machine room
- 14: elevator car guide rail
- 15: elevator controller
- 16: counterweight
- 17: drive
- 19: counterweight guide rail
- 20: elevator brake
- 22: safety actuator
- 24: first safety controller
- 25: safety processor
- 26: elevator safety system
- 28: electric power supply
- 30: temporary power supply circuit
- 32: second safety controller
- 33: safety processor
- 34a, 34b: logic circuits
- 35: activation line
- 36a, 36b: safety switches
- 38: transformer
- 38a: primary coil
- 38b: secondary coil
- 41: first electric switch
- 42: second electric switch
- 43: third electric switch
- 44: fourth electric switch
- 45: switch controller
- 46: power supply
- 48: electric ground
- 50: full-bridge-rectifier
- 51-55: diodes
- 56: capacitor
- 58: resistor
- 60: inductivity
- 62: decoupling diode

## Claims

1. Elevator safety system (26) comprising:
an electronic safety actuator (22) that is configured for, upon activation, braking and/or blocking the movement of an elevator car (6) in an elevator system (2), wherein the electronic safety actuator (22) is configured for being activated by interrupting an electric control signal that is supplied to the electronic safety actuator (22);
a safety controller (24, 32) that is configured for deactivating the electronic safety actuator (22) by supplying the electric control signal to the electronic safety actuator (22) and for activating the electronic safety actuator (22) by interrupting the supply of the electric control signal to the electronic safety actuator (22); and
a temporary power supply circuit (30) that is configured for being activated by the safety controller (24, 32) in advance of a planned reset of the safety controller (24, 32) for temporarily supplying an auxiliary electric control signal to the electronic safety actuator (22) while the safety controller (24, 32) is reset in order to prevent the electronic safety actuator (22) from being activated due to the reset of the safety controller (24, 32).

2. Elevator safety system (26) according to claim 1, wherein the temporary power supply circuit (30) is configured for supplying the auxiliary electric control signal to the electronic safety actuator (22) for a predefined time period that is in the range of 100 ms to 1000 ms.

3. Elevator safety system (26) according to claim 1 or 2, wherein the safety controller (24, 32) comprises at least one safety processor (25, 33), in particular a programmable safety processor (25, 33).

4. Elevator safety system (26) according to any of the preceding claims, wherein the temporary power supply circuit (30) comprises at least one capacitor (56) that is configured for being charged when the temporary power supply circuit (30) is activated, and for supplying the auxiliary electric control signal to the electronic safety actuator (22) while the safety controller (24, 32) is reset.

5. Elevator safety system (26) according to claim 4, wherein the temporary power supply circuit (30) is configured to charge the at least one capacitor (56) from an auxiliary electric power supply (46) that is galvanically isolated from the at least one capacitor (56), wherein the at least one capacitor (56) is in particular charged via a transformer (38).

6. Elevator safety system (26) according to claim 4 or 5, wherein the at least one capacitor (56) is charged by electric pulses that are supplied to the at least one capacitor (56).

7. Elevator safety system (26) according to any of the preceding claims, wherein the temporary power supply circuit (30) comprises at least one of an electric coil (38a, 39b), an electric resistor (58) and a diode (51-55), wherein the temporary power supply circuit (30) comprises in particular a full-bridge-rectifier (50) including a plurality of diodes (51-54).

8. Elevator safety system (26) according to any of the preceding claims, wherein the temporary power supply circuit (30) comprises at least one electric switch (41-44); wherein the temporary power supply circuit (30) comprises in particular two electric switches (41, 42) or four electric switches (41-44).

9. Elevator safety system (26) according to claim 8, wherein the electric switches (41-44) include electromagnetic switches, such as relays, and/or semiconductor switches, such as MOSFETs.

10. Elevator safety system (26) according to claim 8 or 9, wherein the temporary power supply circuit (30) comprises two pairs of electric switches (41-44); wherein the two electric switches of each pair of electric switches (41-44) are configured to switch simultaneously with each other; and wherein electric switches (41-44) of different pairs of electric switches (41-44) are configured to switch oppositely to each other.

11. Elevator safety system (26) according to any of the preceding claims, wherein the temporary power supply circuit (30) comprises a voltage converter; in particular a DC/DC-voltage converter.

12. Elevator system (2) comprising:
at least one elevator car (6) that is configured for traveling along a hoistway between (4) a plurality of landings (8);
at least one electronic safety actuator (22) that is configured for braking and/or stopping movement of the at least one elevator car (6) in an emergency situation; and
at least one safety system (26) according to any of the preceding claims that is configured for activating the at least one electronic safety actuator (22) in an emergency situation.

13. Method of resetting the safety controller (24, 32) of an elevator safety system (26) according to any of claims 1 to 11, wherein the method includes:
(1) activating the temporary power supply circuit (30);
(2) resetting the safety controller (24, 32) after the temporary power supply circuit (30) has been activated; and
(3) supplying the auxiliary electric control signal from the temporary power supply circuit (30) to the electronic safety actuator (22) for preventing the electronic safety actuator (22) from being activated while the safety controller (24, 32) is reset.

14. Method of resetting the safety controller (24, 32) according to claim 13, wherein activating the temporary power supply circuit (30) includes charging at least one capacitor (56) of the temporary power supply circuit (30).

15. Method of resetting the safety controller (24, 32) according to claim 13 or 14, wherein activating the temporary power supply circuit (30) includes periodically opening and closing at least one electric switch (41-44) of the temporary power supply circuit (30).
